# EUROPEAN PATENT APPLICATION

(11) **EP 4 751 971 A1**
(43) Date of publication of application: **03.06.2026**
(21) Application number: 24845286.4
(22) Date of filing: 25.06.2024
(51) Int. Cl.: B60K 35/23

(54) **VEHICLE DISPLAY DEVICE**

(30) Priority: 26.07.2023 JP 2023121240
(71) Applicant: Yazaki Corporation, Tokyo 108-0075 (JP)
(72) Inventor: MURATA, Naohisa, Susono-shi, Shizuoka 410-1194 (JP)
(74) Representative: Grünecker Patent- und Rechtsanwälte PartG mbB
(86) International application number: PCT/JP2024/022927
(87) International publication number: WO 2025/022904

(57) **Abstract**

A vehicle display device (1) includes: a liquid crystal display element (20) that emits display light (L) to be reflected by a windshield (101) provided in a vehicle (100); a sapphire glass (21) that is disposed to adhere to a back surface (20b) of the liquid crystal display element (20); and a temperature detector (24) that is provided on the sapphire glass (21) and detects a temperature of the liquid crystal display element (20). Heat generated in the liquid crystal display element (20) is transferred to the temperature detector (24) via the sapphire glass (21).

## Description

### Field

The present invention relates to a vehicle display device.

### Background

Some vehicle display devices in the related art include thermistors provided on thin film transistors (TFT) panels in order to detect temperatures of the TFTs (see Patent Literature 1). Also, some vehicle display devices in the related art include thermistors provided on flexible printed circuits (FPCs) on which TFT drive circuits are formed (see Patent Literature 2).

### Citation List

### Patent Literature

Patent Literature 1: Japanese Patent Application Laid-open No. JP 2022 - 130 236 A
Patent Literature 2: Japanese Patent Application Laid-open No. JP 2006 - 235 252 A

### Summary

### Technical Problem

However, thermal conductivity of the TFTs and the FPCs, for example, is low in the vehicle display devices in the related art, and there is thus room for improvement in detecting the temperatures of the TFTs with high accuracy in response to temperature rises of the TFTs and the FPCs.

An object of the present invention is to provide a vehicle display device capable of detecting a temperature of a liquid crystal display element with high accuracy. Solution to Problem

The present invention is characterized in that a vehicle display device includes a liquid crystal display element that emits display light to be reflected by a transparent reflective member provided in a vehicle; a transparent plate-shaped thermal conductive member that is disposed to be bonded to either a display surface or a back surface of the liquid crystal display element; and a temperature detector that is provided on the thermal conductive member and detects a temperature of the liquid crystal display element.

### Advantageous Effects of Invention

According to the vehicle display device of the present invention, an effect that it is possible to detect a temperature of a liquid crystal display element with high accuracy is achieved.

### Brief Description of Drawings

FIG. 1 is a schematic diagram illustrating a configuration example of a vehicle display device according to an embodiment.
FIG. 2 is a perspective view illustrating an exterior appearance of a display in the vehicle display device according to the embodiment.
FIG. 3 is a sectional view of the display illustrated in FIG. 2 along A-A.
FIG. 4 is a partially enlarged view of FIG. 3.
FIG. 5 is a sectional view of the display illustrated in FIG. 2 along B-B.
FIG. 6 is a plan view of the display illustrated in FIG. 2.
FIG. 7 is a partial sectional view of a display according to a modification of the embodiment.

### Description of Embodiments

Hereinafter, embodiments of the present invention will be described in detail with reference to the drawings. Note that the present invention is not limited by the following embodiments. In other words, constituent elements in the following embodiments include those that can be easily assumed by those skilled in the art or those that are substantially the same, and various omissions, substitutions, and changes can be made without departing from the gist of the invention.

### [Embodiments]

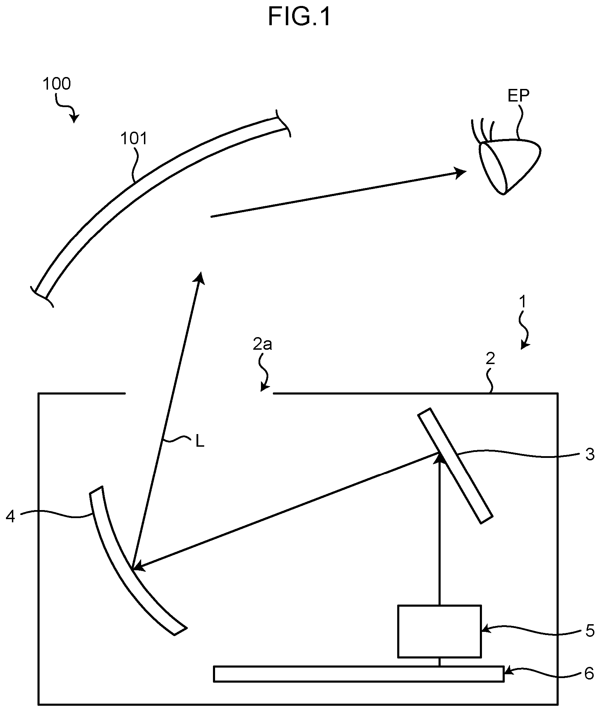

A vehicle display device 1 illustrated in FIG. 1 is a head-up display device mounted on a vehicle 100 such as an automobile, for example. For example, the vehicle display device 1 projects a display image on a windshield 101 of vehicle 100. The vehicle display device 1 projects the display image on the windshield 101 to display a virtual image in front of an eye point EP of a driver (not illustrated). The windshield 101 is an example of a reflecting member and has translucency with which the windshield 101 reflects a part of incident light and transmits the other part. The windshield 101 reflects the display image projected from the vehicle display device 1 toward the eye point EP of the driver as display light L while transmitting a foreground of the vehicle 100. The vehicle display device 1 of the present embodiment is configured to include a case 2, two reflective mirrors 3 and 4, a display 5, and a display control unit 6.

Note that in the following description, an X direction means a "width direction X", a Y direction means a "depth direction Y", and a Z direction means a "height direction Z" from among the X direction, the Y direction, and the Z direction for convenience. It is assumed that the width direction X, the depth direction Y, and the height direction Z are orthogonal to each other. The width direction X corresponds to, for example, the front-rear direction of the vehicle 100. Also, the depth direction Y corresponds to, for example, the width direction of the vehicle 100. Moreover, the height direction Z corresponds to, for example, the up-down direction of the vehicle 100. Each direction used in the following description will be described as a direction in a state where each component of the vehicle display device 1 is assembled unless otherwise particularly specified.

The case 2 is obtained by molding a synthetic resin material, for example, into a box shape. The case 2 houses and supports the reflective mirrors 3 and 4, the display 5, and the display control unit 6 therein. The case 2 has an opening 2a that causes the inside and the outside of the vehicle display device 1 to communicate with each other. The opening 2a is provided at a position in the case 2 facing the windshield 101. The vehicle display device 1 emits the display light L from the case 2 toward the windshield 101 via the opening 2a. The display light L is light emitted from the display 5 and is reflected by the reflective mirrors 3 and 4.

The reflective mirrors 3 and 4 are optical systems that are disposed on an optical path of the display light L from the display 5 to the windshield 101 and reflect the display light L emitted from the display 5 toward the windshield 101. The reflective mirror 3 has a flat reflection surface and is disposed at a position at which the reflective mirror 3 faces the display 5. The reflective mirror 3 fully reflects the display light L emitted from the display 5 toward the reflective mirror 4 by the reflection surface. The reflective mirror 4 has a reflection surface formed of a concave curved surface and is disposed at a position at which the reflective mirror 4 faces the reflective mirror 3. The reflective mirror 4 fully reflects the display light L reflected by the reflective mirror 3 toward the windshield 101 via the opening 2a. The reflective mirror 4 has a function as a magnifying mirror. In other words, the reflective mirror 4 enlarges and reflects the display image such that the display image represented by the display light L after being reflected by the reflective mirror 4 becomes relatively larger than the display image represented by the display light L before being reflected by the reflective mirror 4.

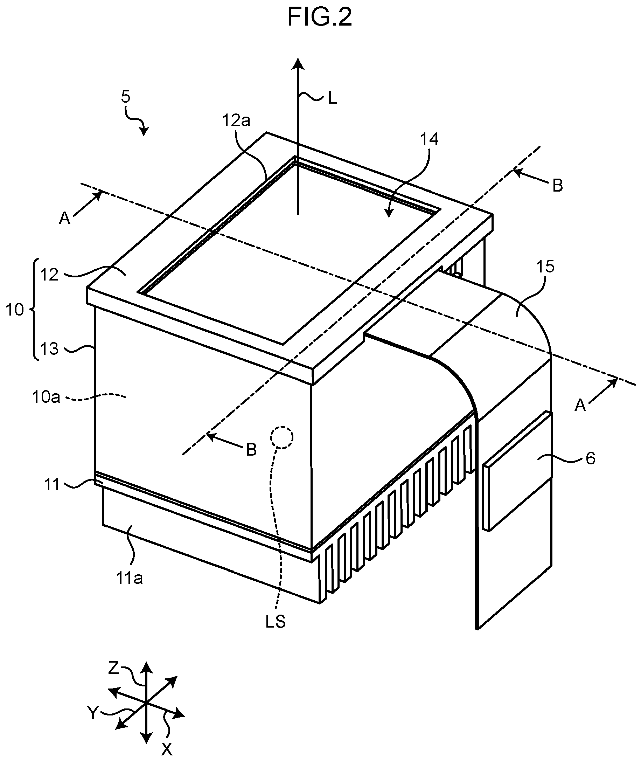

The display 5 is adapted to emit a display image to be projected on the windshield 101 as the display light L. As illustrated in FIG. 2, the display 5 is configured to include a housing 10, a backlight unit 11, and a liquid crystal display unit 14.

The housing 10 is configured by an upper cover 12 and a lower case 13 and has a housing space 10a therein. The housing 10 houses the backlight unit 11 including a light source LS in the housing space 10a, and the liquid crystal display unit 14.

The upper cover 12 is attached to the lower case 13 from the upper side in the height direction Z. The upper cover 12 has a rectangular opening portion 12a when viewed from the height direction Z. The opening portion 12a is a portion through which the display light L emitted from the liquid crystal display unit 14 passes toward the reflective mirror 3 in a state where the upper cover 12 is assembled with the lower case 13.

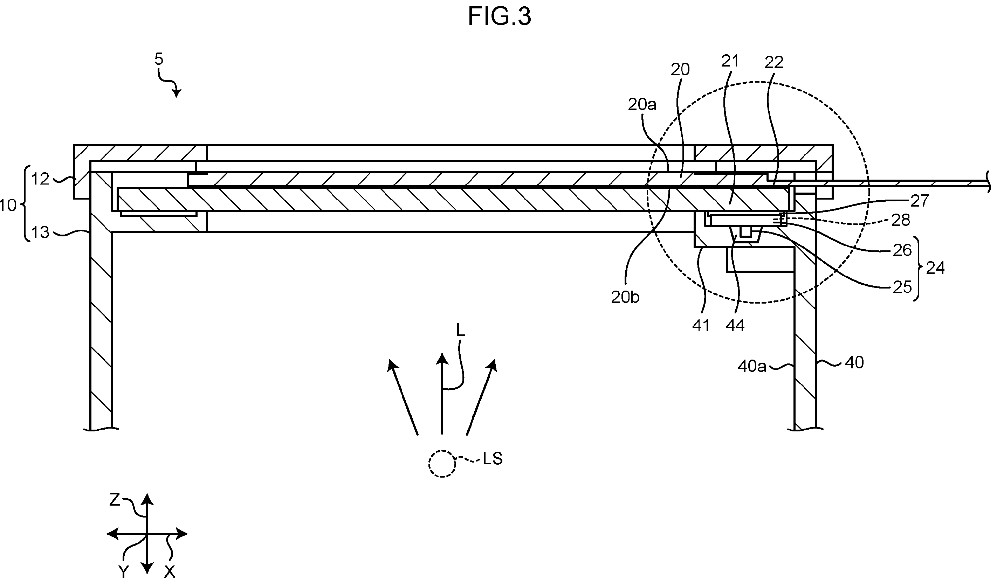

The lower case 13 is a box-shaped member formed of a metal material having thermal conductivity and opened upward in the height direction Z. The lower case 13 supports the liquid crystal display unit 14 and the backlight unit 11 by housing the liquid crystal display unit 14 on the upper side, which is one side in the height direction Z, and housing the backlight unit 11 on the lower side, which is the other side in the height direction Z. As illustrated in FIGS. 3 to 5, the lower case 13 has an outer peripheral wall 40 formed of a metal material having thermal conductivity, and fixes and supports the liquid crystal display unit 14 by a support portion 41 provided on the outer peripheral wall 40.

The backlight unit 11 illuminates the liquid crystal display unit 14 from the back surface side. The backlight unit 11 is driven by, for example, power obtained from a battery (not illustrated) in the vehicle 100. The light source LS is adapted to irradiate the liquid crystal display unit 14 with light and is, for example, a light emitting diode (LED) as a light emitting element. The light source LS is mounted on, for example, a light source substrate (not illustrated). The light source substrate is connected to a heat dissipation portion 11a exposed to the outside of the housing 10.

The liquid crystal display unit 14 includes a liquid crystal display element 20, a sapphire glass 21, an adhesive portion 22, and a temperature detector 24.

The liquid crystal display element 20 is disposed on the optical path of the display light L from the light source LS to the reflective mirror 3, and transmits or reflects the display light L that has been incident thereon from the back surface 20b facing the side of the backlight unit 11, thereby displaying an image from the display surface 20a facing the side of the reflective mirror 3. The liquid crystal display element 20 is, for example, a thin film transistor-liquid crystal display (TFT-LCD). The liquid crystal display element 20 is a film-shaped member including a liquid crystal layer, a glass electrode, a polarizing plate, and the like. The liquid crystal display element 20 has an end portion on one side in the width direction X physically and electrically connected to the display control unit 6 via a wiring 15. The wiring 15 is configured by, for example, a flexible printed circuit (FPC) or the like.

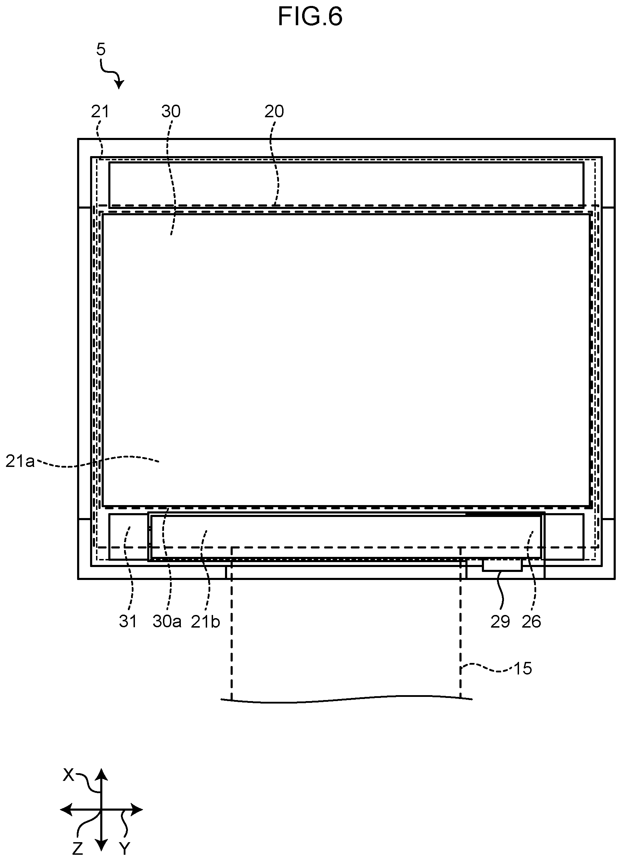

As illustrated in FIG. 6, the liquid crystal display element 20 includes an image display region 30 and an image non-display region 31. The image display region 30 is a portion that is formed in a rectangular shape when viewed from the height direction Z perpendicularly intersecting the plane direction of the liquid crystal display element 20 and displays an image. The image non-display region 31 is a portion that is provided on the side opposite to the image display region 30 along the plane direction with the first display side 30a, which is one of the four sides constituting the image display region 30, sandwiched therebetween and does not display an image.

The sapphire glass 21 is a transparent glass member formed in a rectangular and flat plate shape and transmits the display light L. The sapphire glass 21 of the present embodiment is an example of a thermal conductive member, is formed by artificially growing high-purity alumina (aluminum oxide) into giant crystals, and has higher thermal conductivity at least than air. As illustrated in FIGS. 3 to 5, the sapphire glass 21 is caused to adhere to the back surface 20b of the liquid crystal display element 20 with an adhesive portion 22. The sapphire glass 21 is caused to adhere to the liquid crystal display element 20 by optical bonding such as an optical clear adhesive (OCA) or an optical clear resin (OCR), for example.

Heat of the liquid crystal display element 20 is more likely to be transferred to the sapphire glass 21 by bringing the sapphire glass 21 into contact with the liquid crystal display element 20. It is desirable that the contact area of the sapphire glass 21 with respect to the liquid crystal display element 20 be a large value. The sapphire glass 21 is in contact with the entire back surface 20b of the liquid crystal display element 20, for example. The sapphire glass 21 preferably covers the entire region of the image display region 30 in the liquid crystal display element 20. In this manner, the sapphire glass 21 can curb a stress applied locally to a part of the liquid crystal display element 20, and it is thus possible to curb a whitening phenomenon. The plate thickness of the sapphire glass 21 may be thicker than the plate thickness of the liquid crystal display element 20. The sapphire glass 21 in contact with the liquid crystal display element 20 can increase the heat capacity of the liquid crystal display element 20, and absorbs the heat generated in the liquid crystal display element 20.

As illustrated in FIG. 6, the sapphire glass 21 is larger than the size of the liquid crystal display element 20 in the depth direction Y and is disposed such that the image display region 30 is located inside the outer peripheral edge. Specifically, the sapphire glass 21 is formed to extend such that at least an end portion thereof on one side in the width direction X (the side of the wiring 15) faces the image non-display region 31 that is adjacent to the image display region 30 with the first display side 30a sandwiched therebetween in the height direction Z. The sapphire glass 21 of the present embodiment has an image display region facing region 21a and an image non-display region facing region 21b.

The image display region facing region 21a is located to face the image display region 30 in the height direction Z in a state where the sapphire glass 21 is caused to adhere to the liquid crystal display element 20. On the other hand, the image non-display region facing region 21b is located to face the image non-display region 31 in the height direction Z in the state where the sapphire glass 21 is caused to adhere to the liquid crystal display element 20. The sapphire glass 21 of the present embodiment includes the temperature detector 24 provided on the lower side (the side of the light source LS) of the image non-display region facing region 21b in the height direction Z.

The temperature detector 24 is provided at the sapphire glass 21 and is adapted to detect the temperature of the liquid crystal display element 20. The temperature detector 24 is configured to include a temperature detection element 25 and a printed substrate 26.

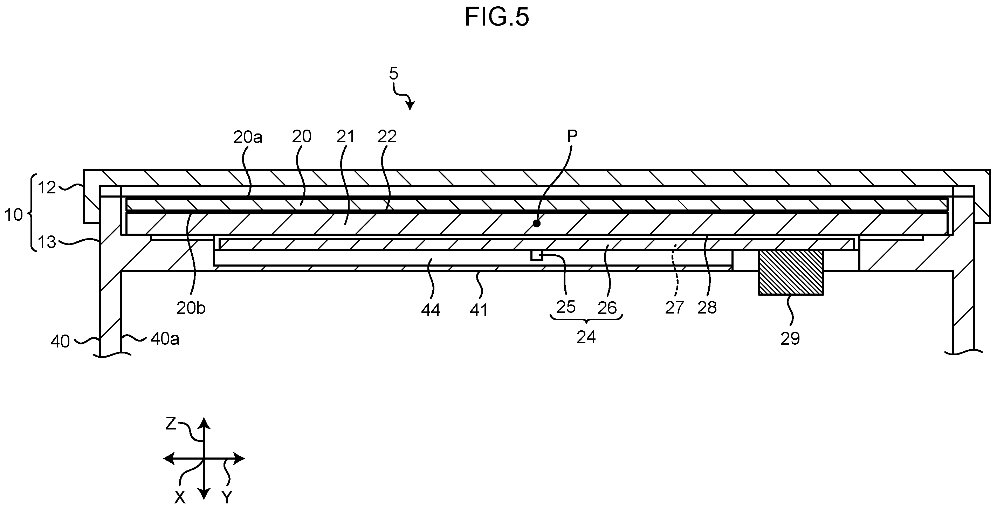

The temperature detection element 25 is provided in the image non-display region facing region 21b of the sapphire glass 21 via the printed substrate 26 and the sheet-shaped sheet member 28 (for example, a thermal sheet) having thermal conductivity. The temperature detection element 25 is, for example, a thermistor. As illustrated in FIG. 5, the temperature detection element 25 is disposed on the printed substrate 26 at a position corresponding to a center portion P of the image non-display region facing region 21b in the extending direction (width direction X). The center portion P is a position that is closest to a heat source in the liquid crystal display unit 14 in the image non-display region facing region 21b.

The printed substrate 26 is provided with the temperature detection element 25 and is formed of a metal material having thermal conductivity. The printed substrate 26 is, for example, an aluminum substrate. The printed substrate 26 forms a temperature detection circuit 27 conductively connected to the temperature detection element 25. As illustrated in FIG. 6, the printed substrate 26 is disposed at a position at which the printed substrate 26 faces the image non-display region facing region 21b and is formed to extend along the first display side 30a. The printed substrate 26 has an oblong shape when viewed in the height direction Z. The printed substrate 26 includes a connector 29 that is disposed to project toward the outside of the printed substrate 26 at an end portion on one side in the depth direction Y. The connector 29 is adapted to electrically connect the temperature detection circuit 27 of the printed substrate 26 to an external device or the like.

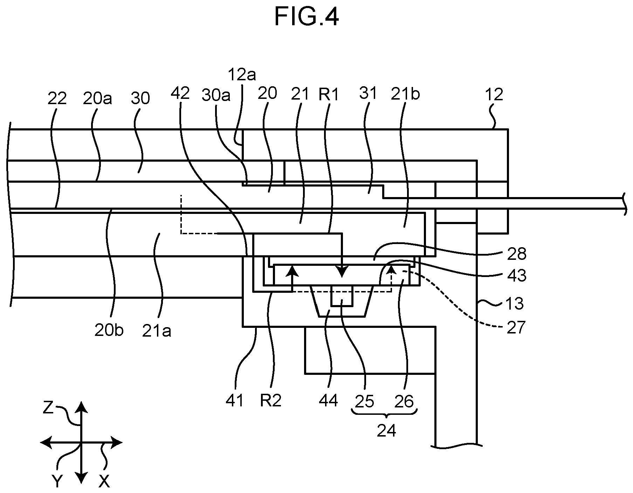

Here, a support structure of the liquid crystal display unit 14 in the lower case 13 of the housing 10 will be described. The support portion 41 is a portion that is formed to project on the side of the housing space 10a from an inner wall surface 40a on the outer peripheral wall 40 of the lower case 13 and supports the sapphire glass 21 disposed to adhere to the back surface 20b of the liquid crystal display element 20. As illustrated in FIG. 4, the support portion 41 has a first support surface 42 and a second support surface 43.

The first support surface 42 is a portion that supports the sapphire glass 21 in a state where the liquid crystal display unit 14 is housed in the lower case 13.

The first support surface 42 is in direct contact with the sapphire glass 21 in a state where the liquid crystal display unit 14 is housed in the lower case 13, and heat transferred to the sapphire glass 21 is more likely to be transferred to the support portion 41 via the first support surface 42.

The second support surface 43 is a portion that is formed continuously with the first support surface 42 and supports the sapphire glass 21 via the printed substrate 26 and the sheet member 28. The second support surface 43 is in direct contact with the printed substrate 26 in the state where the liquid crystal display unit 14 is housed in the lower case 13, and heat transferred to the support portion 41 via the first support surface 42 is more likely to be transferred to the printed substrate 26 via the second support surface 43.

The display control unit 6 is electrically connected to the liquid crystal display element 20 and the printed substrate 26 and controls operations thereof. The display control unit 6 is configured by, for example, an IC chip and is driven by power obtained from the battery inside the vehicle 100. In a case where the temperature detected by the temperature detector 24 is higher than a threshold value, for example, the display control unit 6 executes a temperature decreasing operation for decreasing the temperature of the display 5. Here, the temperature decreasing operation includes, for example, dimming or turning off of the display 5. Specifically, in the case where the temperature detected by the temperature detector 24 is higher than the threshold value, the display control unit 6 transmits a dimming signal or a turning-off signal to the display 5 in accordance with a detection signal received from the temperature detector 24 and performs dimming or turning-off of the display 5.

Next, a heat transfer path of the liquid crystal display unit 14 included in the vehicle display device 1 to the temperature detector 24 will be described with reference to FIG. 4. As described above, the heat source in the liquid crystal display unit 14 is, for example, the image display region 30 of the liquid crystal display element 20. The heat transferred from the image display region 30 to the sapphire glass 21 via the adhesive portion 22 is transferred from the image non-display region facing region 21b to the printed substrate 26 via the sheet member 28 and is transmitted from the printed substrate 26 to the temperature detection element 25 (heat transfer path R1). Furthermore, the heat transmitted to the image non-display region facing region 21b is transferred to the support portion 41 via the first support surface 42 and is then transferred to the printed substrate 26 via the second support surface 43 (heat transfer path R2). In this manner, the heat transferred from the liquid crystal display element 20 to the sapphire glass 21 is transmitted to the temperature detection element 25 through the plurality of heat transfer paths R1 and R2 in the vehicle display device 1 of the present embodiment.

As described above, the vehicle display device 1 according to the present embodiment includes: the liquid crystal display element 20 that emits the display light L to be reflected by the windshield 101 provided in the vehicle 100; the sapphire glass 21 that is disposed to adhere to the back surface 20b of the liquid crystal display element 20; and the temperature detector 24 that is provided in the sapphire glass 21 and detects the temperature of the liquid crystal display element 20.

With the above configuration, the vehicle display device 1 according to the present embodiment enables the temperature detector 24 to detect the temperature of the liquid crystal display element 20 via the sapphire glass 21. The sapphire glass 21 has a thermal conductivity of 40 times or more of the thermal conductivity of the liquid crystal display element 20, and it is thus possible for the temperature detector 24 to detect the temperature of the liquid crystal display element 20 with high accuracy. Furthermore, the vehicle display device 1 can curb a temperature rise of the liquid crystal display element 20 by the heat dissipation effect of the sapphire glass 21 by causing the sapphire glass 21 to adhere to the liquid crystal display element 20.

In addition, the vehicle display device 1 according to the present embodiment is configured such that the temperature detector 24 includes the temperature detection element 25 and the printed substrate 26 that includes the temperature detection element 25 provided thereon and is formed of a metal material having thermal conductivity. The temperature detection element 25 is provided in the sapphire glass 21 via the printed substrate 26 and the sheet member 28 having thermal conductivity. The vehicle display device 1 can thus improve thermal conductivity from the sapphire glass 21 to the printed substrate 26 by including the sheet member 28 with thermal conductivity interposed between the sapphire glass 21 and the printed substrate 26. Furthermore, in a case where the printed substrate 26 is made of, for example, aluminum, the thermal conductivity is 4 to 5 times as high as that of the sapphire glass, and it is thus possible to improve heat conductivity from the printed substrate 26 to the temperature detection element 25 and to expect the heat dissipation effect of the printed substrate 26.

In the vehicle display device 1 according to the present embodiment, the printed substrate 26 is disposed at a position at which the printed substrate 26 faces the image non-display region facing region 21b of the sapphire glass 21 and is formed to extend along the first display side 30a. In this manner, the vehicle display device 1 can enlarge the heat transfer area of the heat transmitted from the image non-display region facing region 21b to the printed substrate 26. As a result, the temperature detector 24 can improve temperature detection accuracy as compared with printed substrates in the related art. Also, the temperature detection element 25 is disposed at the position corresponding to the center portion P of the image non-display region facing region 21b in the extending direction on the printed substrate 26 in the vehicle display device 1. In a case where a temperature detection element is provided for a liquid crystal display element in a liquid crystal display unit in the related art, it is difficult to provide the temperature detection element near an image display region, which is a heat source, in relation to a layout of a wiring portion connected to the liquid crystal display element (see FIG. 2 of Patent Literature 2, for example). With the above configuration, the sapphire glass 21 is provided on the side of the back surface 20b of the liquid crystal display element 20, and the temperature detector 24 is provided on the back surface side of the sapphire glass 21, in the vehicle display device 1 of the present embodiment. In this manner, the vehicle display device 1 enables the temperature detection element 25 to be disposed at a position closer to the image display region 30, which is a heat source, as compared with the vehicle display devices in the related art, and it is thus possible to improve accuracy of detection of the temperature of the liquid crystal display element 20 by the temperature detection element 25.

In the vehicle display device 1 according to the present embodiment, the housing 10 has the outer peripheral wall 40 formed of a metal material having thermal conductivity, and the outer peripheral wall 40 has the support portion 41 that supports the sapphire glass 21 and the printed substrate 26. In this manner, the vehicle display device 1 allows the path of heat transmission from the liquid crystal display element 20 to the temperature detection element 25 to be not only a path via the sapphire glass 21 but also a path via the support portion 41, and it is thus possible to improve temperature detection accuracy.

Although the sapphire glass 21 is caused to adhere on the side of the back surface 20b of the liquid crystal display element 20 in the embodiment, the present invention is not limited thereto, and the sapphire glass 21 may be caused to adhere on the side of the display surface 20a of the liquid crystal display element 20. Although the sapphire glass 21 is used as a transparent member with thermal conductivity, the present invention is not limited thereto.

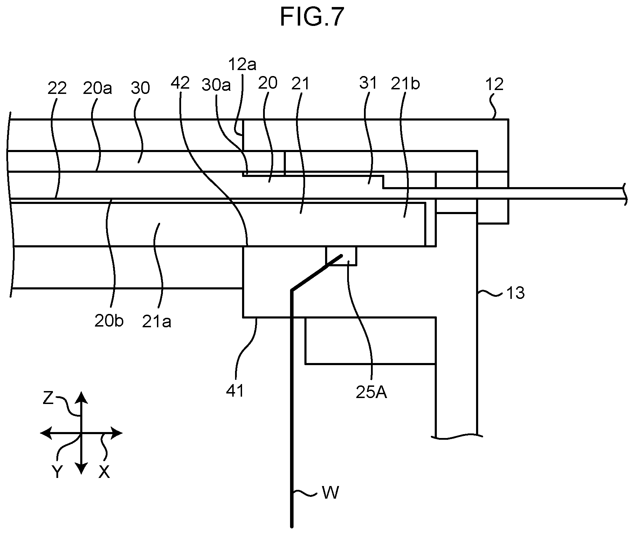

Moreover, although the temperature detector 24 is configured to include the temperature detection element 25 and the printed substrate 26 in the embodiment, the present invention is not limited thereto. FIG. 7 is a partial sectional view of a display according to a modification of the embodiment. A temperature detector 25A illustrated in FIG. 7 is, for example, a thermocouple or a thermistor. The temperature detector 25A is connected to an external temperature detection circuit (not illustrated) via a wiring W. The temperature detector 25A is provided between an image non-display region facing region 21b of a sapphire glass 21 and a support portion 41 of a housing 10 and is disposed to be in contact with the sapphire glass 21 in a state where the temperature detector 25A is housed in a recessed portion of the support portion 41. In this manner, the temperature detector 24 may be a temperature detection element.

Although the printed substrate 26 is preferably made of aluminum in the embodiment, the present invention is not limited thereto, and the printed substrate 26 may be one obtained by providing many vias (VIA) in an FR4_PCB or an FPC with satisfactory thermal conductivity.

Although the sapphire glass 21 has been described as an example of the thermal conductive member in the embodiment, the present invention is not limited thereto. For example, a blue plate glass or a white plate glass may be used as the thermal conductive member instead of the sapphire glass 21, although the thermal conductivity decreases as compared with the sapphire glass.

Also, although the sapphire glass 21 is in contact with the printed substrate 26 via the sheet member 28 in the embodiment, the present invention is not limited thereto, and a structure in which the sapphire glass 21 is in direct contact with the printed substrate 26 without any intervention of the sheet member 28 may be adopted.

Although the windshield 101 is used as a reflective member of the vehicle 100 in the embodiment, the present invention is not limited thereto, and the reflective member may be a combiner, for example.

Furthermore, although the vehicle display device 1 includes the two reflective mirrors 3 and 4 in the embodiment, the present invention is not limited thereto, and the vehicle display device 1 may include one reflective mirror. Moreover, the vehicle display device 1 may be adapted to emit display light L directly to the windshield 101.

### Reference Signs List

- 1: VEHICLE DISPLAY DEVICE
- 5: DISPLAY
- 10: HOUSING
- 20: LIQUID CRYSTAL DISPLAY ELEMENT
- 20a: DISPLAY SURFACE
- 20b: BACK SURFACE
- 21: SAPPHIRE GLASS
- 24: TEMPERATURE DETECTOR
- 100: VEHICLE
- 101: WINDSHIELD
- L: DISPLAY LIGHT

## Claims

1. A vehicle display device comprising:
a liquid crystal display element that emits display light to be reflected by a transparent reflective member provided in a vehicle;
a transparent plate-shaped thermal conductive member that is disposed to be bonded to either a display surface or a back surface of the liquid crystal display element; and
a temperature detector that is provided on the thermal conductive member and detects a temperature of the liquid crystal display element.

2. The vehicle display device according to claim 1, wherein
the temperature detector is configured to include
a temperature detection element, and
a printed substrate on which the temperature detection element is provided, the printed substrate being formed of a metal material having thermal conductivity,
the printed substrate forms a temperature detection circuit that is conductively connected to the temperature detection element, and
the temperature detection element is provided in the thermal conductive member via the printed substrate and a sheet member having thermal conductivity.

3. The vehicle display device according to claim 2, wherein
the liquid crystal display element includes
an image display region that is formed in a rectangular shape when viewed from a direction perpendicularly intersecting a plane direction of the liquid crystal display element, an image being displayed in the image display region, and
an image non-display region that is provided on a side opposite to the image display region along the plane direction with a first display side, which is one of four sides constituting the image display region, sandwiched therebetween,
the thermal conductive member includes
an image non-display region facing region at a position at which the image non-display region facing region faces the image non-display region in a state where the thermal conductive member is caused to adhere to the back surface of the liquid crystal display element,
the printed substrate is disposed at a position at which the printed substrate faces the image non-display region facing region, and extends along the first display side, and
the temperature detection element is disposed at a position corresponding to a center portion of the printed substrate in an extending direction of the image non-display region facing region.

4. The vehicle display device according to claim 2 or 3, further comprising:
a housing that has a housing space in which the liquid crystal display element, the thermal conductive member, and the temperature detector are housed,
the housing includes an outer peripheral wall that is formed of a metal material having thermal conductivity,
the outer peripheral wall includes a support portion that is formed to project from an inner wall surface toward the housing space side, and supports the thermal conductive member disposed to adhere to the back surface of the liquid crystal display element, and
the support portion includes
a first support surface that supports the thermal conductive member, and
a second support surface that is formed continuously with the first support surface and supports the thermal conductive member via the printed substrate and the sheet member.

5. The vehicle display device according to claim 1, wherein
the temperature detector is configured by a temperature detection element that is conductively connected to a temperature detection circuit, and
the temperature detection element is in direct contact with the thermal conductive member.
